# EUROPEAN PATENT APPLICATION

(11) **EP 4 544 959 A1**
(43) Date of publication of application: **30.04.2025**
(21) Application number: 23826045.9
(22) Date of filing: 20.05.2023
(51) Int. Cl.: A47B 88/90, B60R 7/04, B60N 2/90

(54) **DRAWING DEVICE AND VEHICLE HAVING SAME**

(30) Priority: 23.06.2022 CN 202210719714
(71) Applicant: Wuhan Lotus Cars Co., Ltd., Wuhan, Hubei 430056 (CN)
(72) Inventor: ZHANG, Xiaonan, Wuhan, Hubei 430056 (CN); CHEN, Yihao, Wuhan, Hubei 430056 (CN); ZHAO, Liang, Wuhan, Hubei 430056 (CN); WANG, Xudong, Wuhan, Hubei 430056 (CN)
(74) Representative: Zaboliene, Reda
(86) International application number: PCT/CN2023/095416
(87) International publication number: WO 2023/246396

(57) **Abstract**

A drawing device, comprising a drawing member (2), a transmission arm (10), a locking member (8), and a reset elastic member (194). The transmission arm (10) is provided on the drawing member (2), can move inwards or outwards along with the drawing member (2), and extends from a first side of the drawing member (2) to a second side opposite to the first side; a protruding block (21) protruding towards the second side of the drawing member (2) is provided on the drawing member (2); the locking member (8) is located on the movement path of the drawing member (2) and lock the protruding block (21); a first end (81) of the locking member (8) can be detachably fastened to the transmission arm (10), and a second end (82) of the locking member (8) is located between the reset elastic member (194) and the drawing member (2); when the transmission arm (10) is fastened to the locking member (8), the transmission arm (10) can drive the locking member (8) to rotate and compress the reset elastic member (194) under the action of an external force, so as to release the locking of the protruding block (21) by the locking member (8) so that the drawing member (2) can move outwards; when the drawing member (2) moves inwards, the locking member (8) can lock the protruding block (21) again under the pushing of the reset elastic member (194) and locks the drawing member (2). The drawing device has a large operation smoothness and jerking adjusting space. Also disclosed is a vehicle comprising the device.

## Description

The present document claims priority to Chinese present application No. 202210719714.2, filed on 23 June 2022, applied by WUHAN LOTUS CARS Co., LTD., and entitled "Drawing device and vehicle having the same". The full text of the document is incorporated herein by reference.

### TECHNICAL FIELD

The present document relates to a drawing device and a vehicle having the same.

### DESCRIPTION OF RELATED ART

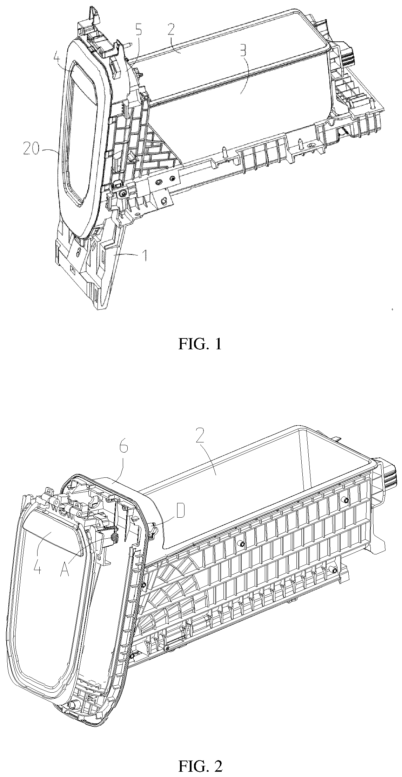

As shown in FIGS. 1 to 3, when a drawing device is arranged in the passenger compartment of a vehicle, it is mounted along the front-back direction of the vehicle and is pulled out along the front-to-back direction. Hereinafter, the end of the drawing device located at the rear side of the passenger compartment is considered as the front end of the drawing device, and the end of the drawing device located at the front side of the passenger compartment is considered as the back end of the drawing device. The drawing device generally includes a base assembly 1, strip latches A, a drawing member 2, outer guards 3, a handle assembly 4, a fixing shell 5 and a first shell 6. The drawing member 2 is a rectangular box with an upper opening, the base assembly 1 is located on a lower side of the drawing member 2, and a slide structure (not shown) is provided between the base assembly 1 and the drawing member 2, for realizing the pull-out action of the drawing member 2. The outer guards 3 are provided on outer sides of the left and right surfaces of the drawing member 2, and the first shell 6 is integrated with a front portion of the drawing member 2, which closes the front opening of the drawing member 2 and has a part that is higher than the drawing member 2. In the locking state, a pair of strip latches A are disposed in the first shell 6 and extend out of the first shell 6 through through-holes D provided on both sides of the first shell 6. The handle assembly 4 controls the strip latches A and is disposed at the front side of the first shell 6, the door-liked fixing shell 5 is covered on the outer side of the first shell 6 and is fixedly connected with other portions of the vehicle. The fixing shell 5 is provided with locking boxes B on the inner side thereof, and the locking boxes B are provided with locking holes C that can cooperate with the strip latches A. In this way, when the drawing device is in the locking state, the strip latches A pass through the through-holes D and extend into the locking boxes B to snap with the fixing shell 5, when it is required to pull out the drawing member 2, the strip latches A will be driven by the handle assembly 4 to contract toward the inner side of the drawing device along the right-left direction of the vehicle to release the snap with the fixing shell 5, so that the drawing member 2 can be pulled out together with the handle assembly 4.

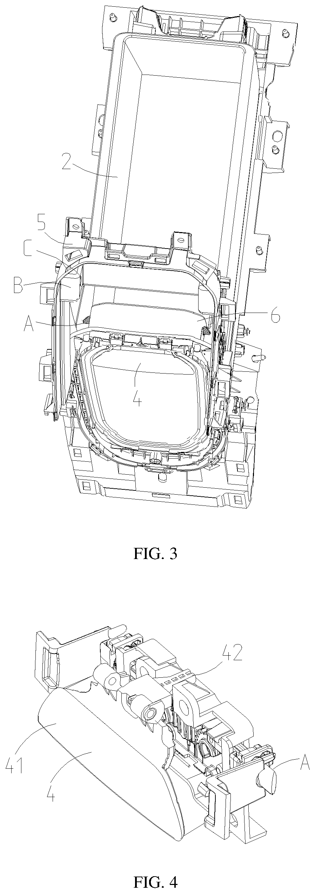

Referring further to FIGS. 4 to 5, the first shell 6 is further provided with a holding member 7, a first transmission portion E, a torsion spring I, and two second transmission portions F, and the middle of the holding member 7 is provided with a recessed area, the first transmission portion E, the second transmission portions F, and the torsion spring I are received in the recessed area. The two second transmission portions F are located on the left and right sides of the first transmission portion E and are rotatably disposed on the holding member 7. The pair of strip latches A are disposed on the sides of the second transmission portions F that are away from the first transmission portion E and are connected with the corresponding second transmission portions F, the torsion spring I is disposed on the lower side of the first transmission portion E.

Specifically, the ends of the torsion spring I are respectively against the lower part of the first transmission portion E and the bottom of the recessed area of the holding member 7. The lower part of the first transmission portion E is provided with teeth on its left and right surfaces, and the upper part of the first transmission portion E is in the form of a rectangular shape. Correspondingly, the second transmission portion F is an atypical shaped member and is provided with teeth on the surface facing the first transmission portion E. The second transmission portions F are engaged with the lower part of the first transmission portion E by the teeth, further, the second transmission portion F is provided with a sliding post G extending along the front-back direction of the vehicle at the end of the second transmission portion F away from the first transmission portion E, and a mating groove H is provided at the end of the strip latch A that is close to the second transmission portion F, which allows the sliding post G to slide therein, and the mating groove H extends in the up-down direction of the vehicle.

As mentioned above, corresponding to these arrangements, the handle assembly 4 includes a handle 41 capable of rotating upward or downward, and a follower part 42 connected to the rear part of the handle 41. The follower part 42 is located on the upper side of the upper part of the first transmission portion E, and is capable of applying a downward force to the first transmission portion E when the handle assembly 4 is rotated. Therefore, when the handle 41 is rotated upward by an external force, the follower part 42 will move downward and exert a downward force on the first transmission portion E, so that the first transmission portion E will move downward and cause the torsion spring I to elastically deform, thereby driving the second transmission portion F at the left and right sides of the first transmission portion E to rotate. At this time, the second transmission portion F located on one side of the first transmission portion E will be rotated in a counterclockwise direction, and the second transmission portion F located on the other side of the first transmission portion E will be rotated in a clockwise direction. The two second transmission portions F will drive the corresponding strip latches A to move toward the center of the holding member 7, so that the strip latches A are released from snapping with the fixing shell 5, thereby realizing the unlocking of the drawing device and allowing the drawing member 2 to be pulled out. Similarly, when the external force is withdrawn, the first transmission portion E will move upward under the elastic recovery force of the torsion spring I, and the strip latches A will return to their original positions and snap with the fixing shell 5, so that the drawing device can be relocked. It should be noted that in order to ensure that the strip latches A move in the left-right direction of the vehicle, related art will limit the strip latches A in the up-down direction, and this limiting effect can be achieved by constructing the structure of the holding member 7 or adding limit attachments, which will not be discussed herein.

The disadvantage of the above-described solution for this type of drawing device is that there is limited scope for optimizing the stuttering sensation when locking. Specifically, in the related art, in order to improve the stutter sensation when locking the strip latches A, an slant surface is usually provided at the end of the strip latch A for engaging with the fixing shell 5, however, due to the limited length of the strip latch A, the slope of the slant surface that can be provided on the strip latch A is also limited, resulting in a limited effect of adjusting the smoothness of the pull-out operation of the drawing device.

### TECHNICAL SOLUTION

An object of the present document is to provide a drawing device and a vehicle having the same.

The drawing device provided by the present document includes a drawing member, a transmission arm, a locking member and a reset elastic member. The transmission arm is provided on the drawing member, capable of moving inward or outward along with the drawing member, and extending from a first side of the drawing member to a second side opposite to the first side. The drawing member is provided with a protruding block projecting toward its second side. The locking member is located in a movement path of the drawing member and capable of locking with the protruding block. A first end of the locking member is capable of detachably snapping with the transmission arm, a second end of the locking member being located between the reset elastic member and the drawing member. When the transmission arm is snapped with the locking member, the transmission arm is capable of driving the locking member to rotate by an external force and compress the reset elastic member, releasing the locking of the protruding block by the locking member and allowing the drawing member to move outward. When the drawing member moves inward, the locking member is capable of being pushed by the reset elastic member to relock the protruding block and lock the drawing member.

Optionally, further includes a base assembly, the base assembly is located on the second side of the drawing member, the drawing member is able to move relative to the base assembly, the locking member is located between the drawing member and the base assembly, a middle part of the locking member is rotatably provided on the base assembly. When the transmission arm applies force to the locking member by the external force, the first end and the transmission arm are capable of rotating in a direction close to the drawing member and the second end is capable of rotating in a direction away from the drawing member.

Optionally, further includes an auxiliary assembly fixed to the base assembly, the locking member has a locking member pivot fixed thereto. The auxiliary assembly is provided with pivot supports, the pivot supports are disposed at both sides of the locking member, and rotatably securing the locking member pivot to the pivot support.

Optionally, further includes an auxiliary assembly fixed to the base assembly, the locking member has a locking member pivot fixed thereto. The auxiliary assembly is provided with a pivot support, in a circumferential direction of the locking member pivot, a part of the locking member pivot contacts with the pivot support, and the other part of the locking member pivot passes through a plate member of the base assembly. The plate member is provided with a U-shaped aperture having an opening facing toward the pivot support, the locking member pivot passes through the aperture and abuts against the pivot support, enable the locking member to be rotatably disposed between the base assembly and the drawing member.

Optionally, further includes a holding member, the holding member is provided with a pressing plate and toothed transmission members, the pressing plate is capable of moving relative to the holding member under the action of the external force, the toothed transmission member is rotatably disposed on the holding member and with one end engaging with the transmission arm and the other end being slidably connected with the pressing plate, so that when the pressing plate moves by the external force, it is capable of driving the toothed transmission member to rotate and driving the transmission arm to move toward the drawing member.

Optionally, both ends of the holding member are provided with first limit guides, and both ends of the pressing plate cooperate with the first limit guides and are capable of sliding along the first limit guides.

Optionally, the toothed transmission members are provided on both sides of the transmission arm, the toothed transmission member is provided with teeth at an end near the transmission arm and lugs at an end far from the transmission arm, the pressing plates are provided with follower posts extending into the lugs from the pressing plates, when the pressing plate moves toward the second side of the drawing member under the action of the external force, the toothed transmission members located at different sides of the transmission arm are driven by the follower posts and rotated in opposite directions, driving the transmission arm to move toward the drawing member.

Optionally, further includes an elastic member and a first shell, the first shell is disposed at one end of the drawing member, the holding member is disposed inside the first shell, the elastic member is located between the first shell and the transmission arm and is fixedly connected to the transmission arm, the elastic member is compressed when the transmission arm is driven by the toothed transmission member toward the drawing member, and the transmission arm is reset under the push of the elastic member after the withdrawal of the external force.

Optionally, the transmission arm is L-shaped, which extends from an upper side of the drawing member to a lower side of the drawing member via a front side of the drawing member, the holding member is provided with a transmission limit guide, the transmission limit guide is formed by projecting outward from the holding member, an upper part of the transmission arm in connected to the transmission limit guide and capable of sliding along the transmission limit guide, the transmission arm has a U-shaped limit member near a lower part of the transmission arm. A part of the transmission arm is disposed in an opening of the limit member and spaced apart from a closed end of the limit member.

Optionally, the first side is an upper side, the second side is a lower side, the transmission arm is in the form of an L-shape, which extends from the upper side of the drawing member to the lower side of the drawing member via a front side of the drawing member; the transmission arm is capable of driving the locking member to rotate by the external force, to drive the first end to rotate upward with the transmission arm, and drive the second end to rotate downward and away from the drawing member, so that the protruding block is released from locking by the locking member, and the drawing member is able to move outward.

Optionally, the holding member is provided with a transmission limit guide, the transmission limit guide is formed by projecting outward from the holding member, an upper part of the transmission arm cooperates with the transmission limit guide and is capable of sliding along the transmission limit guide, a U-shaped limit member is provided nearby a lower part of the transmission arm, a part of the transmission arm is located in an opening of the limit member and spaced apart from a closed end of the limit member.

Optionally, further includes a handle assembly, the handle assembly includes a handle, a follower part and a rotation shaft, the rotation shaft is located between the handle and the follower part, the follower part is capable of driving by the handle to apply force to the pressing plate to make the pressing plate slide.

Optionally, further includes an exterior trim panel and a fixing shell, the fixing shell covers at an outer side of the first shell, the exterior trim panel is provided between the handle and the first shell, and located in front of the first shell, which is capable of snapping with the fixing shell to cover the first shell.

The present document also provides a vehicle including the drawing device as described in any one of the forgoing items.

In summary, by providing the protruding block on the drawing member, providing the transmission arm, and providing the locking member that can hinder the movement of the protruding block in the expected movement direction of the drawing member when the drawing member is opened from a locking state of the drawing device, and then connecting the transmission arm to the locking member, so that the movement of the transmission arm can drive the locking member away from the expected movement trajectory of the protruding block. The present document is able to provide a drawing device, and has the following beneficial effects:
The drawing device provided by the present document has a large space for adjustment of the smoothness of operation and the stutter sensation. Particularly, since the second end usually abuts against the protruding block when the drawing member is in the state of being pulled out or reset, by flexibly setting the length and the slope of the protruding block, the person skilled in the art is able to adjust, as required, the smoothness and the stutter sensation that is fed back to the occupant during the movement of the drawing member. At the same time, since the protruding block is set on the drawing member, the range of the length that can be arranged for the protruding block is obviously much greater than the range of the slope that can be arranged on the strip latch in the related art, and a larger adjustment space can be provided for the operation smoothness and the stutter sensation of the protruding block.

The above description is only an overview of the technical solutions of the present document, in order to be able to understand the technical means of the present document more clearly, and can be implemented in accordance with the contents of the specification, and in order to make the above and other purposes, features and advantages of the present document can be understood more obviously and easily, the following specially cites the preferred embodiments, and accompanying with the drawings, the following is described in detail.

### BRIEF DESCRIPTION OF THE DRAWINGS

FIG. 1 is a schematic view of a drawing device in a related art.
FIG. 2 is a schematic first view showing a part of the drawing device in the related art (the fixing shell and the outer guard are hidden).
FIG. 3 is a schematic second view showing a part of the drawing device in the related art (the fixing shell is moved to show the first shell and the strip latch).
FIG. 4 is a schematic view of the handle assembly and the strip latch in the related art.
FIG. 5 is a schematic view showing the main mechanism within the drawing device that drives the movement of the strip latch in the related art.
FIG. 6 is a schematic view of a drawing device in an embodiment of the present document.
FIG. 7 is a schematic view showing the orientation relationship between the outer shell, the first shell and the handle assembly in an embodiment of the present document.
FIG. 8 is a schematic view showing the positions of the locking member and the protruding block on the drawing device in an embodiment of the present document (the base has been moved for clear illustration).
FIG. 9 is a schematic, assembled view of the first shell, the second shell and the handle assembly in an embodiment of the present document (the fixing shell is hidden).
FIG. 10 is a schematic, assembled view of the handle assembly and the second shell in an embodiment of the present document.
FIG. 11 is a schematic view showing the orientation relationship between the first shell, the holding member and the second shell in an embodiment of the present document.
FIG. 12 is an exploded view showing a part of the drawing device in an embodiment of the present document.
FIG. 13 is a first schematic view showing a part of the drawing device in an embodiment of the present document.
FIG. 14 is a second schematic view showing a part of the drawing device in an embodiment of the present document.
FIG. 15 is a third schematic view showing a part of the drawing device in an embodiment of the present document.
FIG. 16 is a fourth schematic view showing a part of the drawing device in an embodiment of the present document.
FIG. 17 is a fifth schematic view showing a part of the drawing device in an embodiment of the present document.
FIG. 18 is a schematic view showing the orientation relationship between the auxiliary assembly, the protruding block and the locking member in an embodiment of the present document.
FIG. 19 is a schematic, assembled view of the auxiliary assembly and the base assembly in an embodiment of the present document.
FIG. 20 is a schematic view of an embodiment of the present document when the drawing device is in a locking state.
FIG. 21 is a schematic view of an embodiment of the present document when the drawing device is unlocked.
FIG. 22 is a schematic view of an embodiment of the present document when the drawing member and the transmission arm are pulled out along an expected direction.
FIG. 23 is a schematic view of an embodiment of the present document when the locking member abuts against the protruding block on the base assembly.
FIG. 24 is a first schematic view of an embodiment of the present document when the locking member abuts against the lowest point of the protruding block during the resetting of the drawing member.
FIG. 25 is a schematic view of an embodiment of the present document showing the locking member is at different heights when the drawing member is unlocked and the drawing member is reset.
FIG. 26 is a second schematic view of an embodiment of the present document when the locking member abuts against the lowest point of the protruding block during resetting of the drawing member.

### Description of the accompanying markings

A-strip latch, B-locking box, C-locking hole, D-through-hole, E-first transmission portion, F-second transmission portion, G-sliding post, H-mating groove, I-torsion spring;
1-base assembly, 2-drawing member, 21-protruding block, 3-outer guard, 4-handle assembly, 41-handle, 42-follower part, 43-rotation shaft, 44-torsion spring, 5-fixing shell, 6-first shell, 7-holding member, 71-mating shaft, 8-locking member, 81-first end, 811-first feature, 812-second feature, 82-second end, 83-locking member pivot, 9-second shell, 91-vertical bar, 92-sound deadening felt, 10-transmission arm, 101-hooked end, 11- elastic member, 12-pressing plate, 121-contact block, 122-follower post, 13-toothed transmission member, 131-center-through-hole, 132-lugs, 1321-penetration, 133-limit slot, 14-first limit guide, 15-second limit guide, 16-third limit guide, 17-transmission limit guide, 18-limit snap, 19-auxiliary assembly, 191-base plate, 192-flexible member, 193-pivot support, 194-reset elastic member, 195-connection member, 20-exterior trim panel, 22-limit member, 23-aperture.

### DETAILED DESCRIPTION OF THE EMBODIMENTS

Specific embodiments of the present document are described in further detail below in conjunction with the accompanying drawings and embodiments. The following embodiments are used to illustrate the present document, but are not intended to limit the scope of the present document.

The terms "first", "second", and the like in the specification and claims of the present document are used to distinguish similar objects, and are not intended to be used to describe a particular order or sequence.

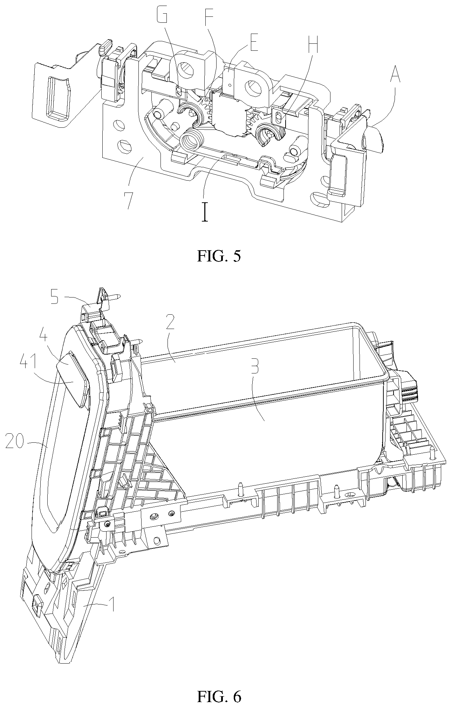

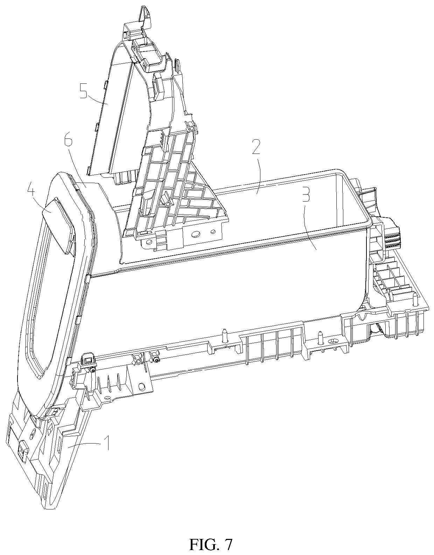

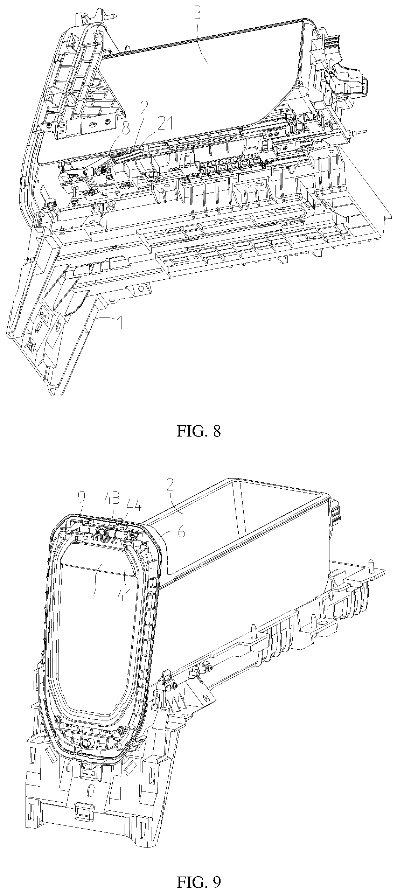

As shown in FIGS. 6 and 7, the present embodiment provides a drawing device provided in the interior of a passenger compartment of a vehicle, wherein the length direction of the drawing device refers to the front-back direction of a vehicle, the pull-out direction of the drawing device is in the back-to-front direction, the first side refers to the upper side, and the second side refers to the lower side. The drawing device includes a base assembly 1, a drawing member 2, outer guards 3, a handle assembly 4, a fixing shell 5, and a first shell 6. The drawing member 2 is a rectangular box with an upper opening, the base assembly 1 is located on the lower side of the drawing member 2, and a slide structure (not shown) is provided between the base assembly 1 and the drawing member 2 for facilitating the pull-out action of the drawing member 2. The outer guards 3 are provided on the outer sides of the left and right surfaces of the drawing member 2 that extend in the length direction of the drawing member 2. The first shell 6 is located in the front part of the drawing member 2, which is integrated with the drawing member 2 and closes the front opening of the drawing member 2, and has a part higher than the drawing member 2. The handle assembly 4 is provided on the upper front side of the first shell 6, the door-like fixing shell 5 is covered on the outer side of the first shell 6, and the fixing shell 5 and the base assembly 1 are fixedly connected to other parts of the vehicle. In particular, the present embodiment is provided with a protruding block 21 having a triangular cross-section as shown in FIG. 8 (which is partially filled for the sake of clarity illustration) on the lower surface of the drawing member 2, and a locking member 8 capable of rotating in response to the rotation of the handle assembly 4 is provided between the base assembly 1 and the drawing member 2. When the drawing device is in the locking state, the locking member 8 hinders at the front side of the protruding block 21 so as to make the drawing member 2 incapable of moving forward (i.e., being pulled out), and when the handle assembly 4 is rotated upward by an external force (i.e., when the drawing device is unlocked), the locking member 8 will move away from the expected forward trajectory of the protruding block 21 so that the drawing member 2 can be pulled outward without hindrance, thereby realizing the unlock of the drawing device.

Specifically, the handle assembly 4 in this embodiment includes a handle 41, a rotation shaft 43 and a torsion spring 44 as shown in FIG. 9, and a second shell 9 is further fixedly provided in the first shell 6. The rotation shaft 43 is rotatably disposed on the second shell 9 along the left-right direction of the vehicle, and the torsion spring 44 is disposed around the outer peripheral side of the rotation shaft 43 and abuts against the second shell 9, so as to enable the handle 41 to rotate around the rotation shaft 43 and rotate upward by the action of an external force, and reset by the elasticity of the torsion spring 44 after the external force is withdrawn. It is to be noted that how exactly the torsion spring 44 and the second shell 9 can be set to achieve this effect belongs to the flexible design available by the person of ordinary skill in the art, and will not be repeated herein.

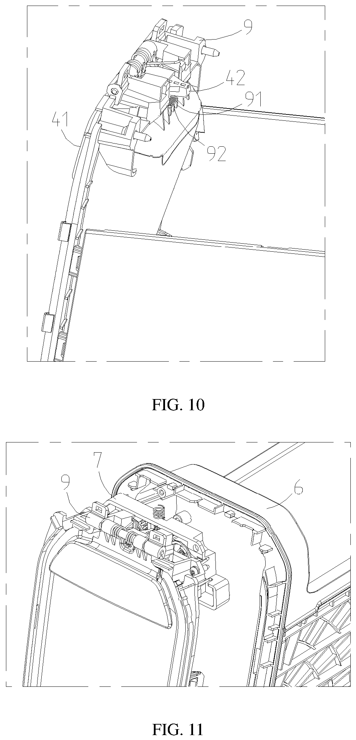

Referring further to FIG. 10, the handle assembly 4 further includes a follower part 42 connected to the rear part of the handle 41, and a fixed angle is formed between the follower part 42 and the handle 41. After the handle assembly 4 is assembled with the second shell 9, the handle 41 is located at the front side of the second shell 9, and the follower part 42 passes through the second shell 9 and extends to the rear side of the second shell 9. Correspondingly, at the rear part of the second shell 9, a row of vertical bars 91 extending upward from the rear surface of the second shell 9 are provided at positions directly below the follower part 42, and a sound deadening felt 92 is adhered to the upper side of the vertical bars 91, which is spaced apart from the follower part 42. When the handle 41 is rotated upward to a certain travelling distance, the follower part 42 will strike the second shell 9 through the sound deadening felt 92, so that the occupant rotating the handle 41 can be informed by the counteraction force that the unlock of the drawing device has been completed.

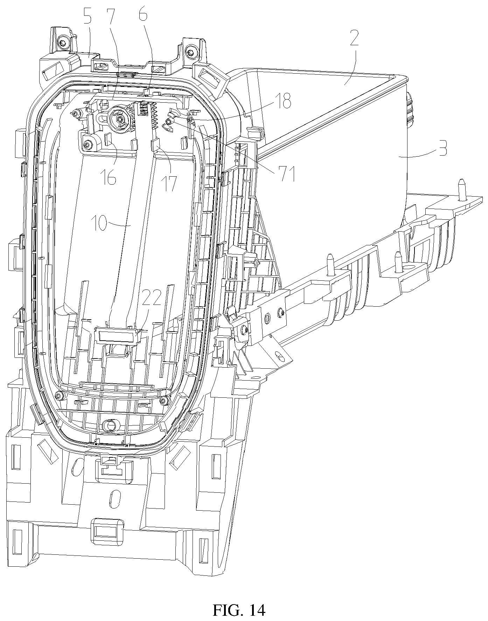

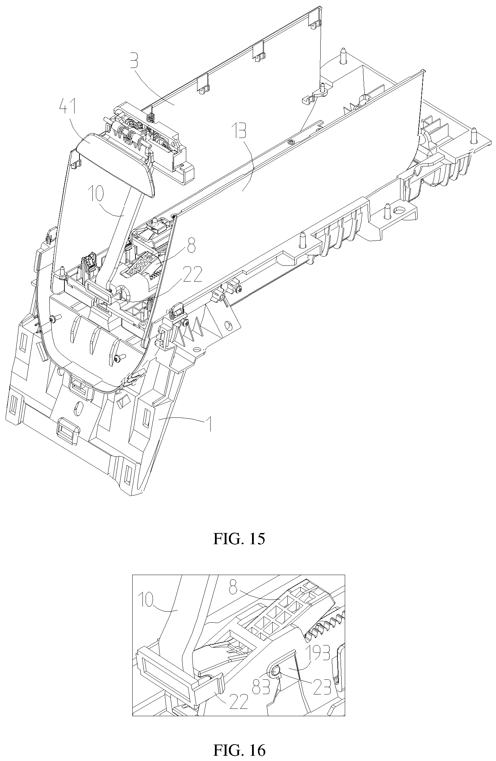

In this embodiment, in order to achieve the effect that the drawing device is unlocked when the follower part 42 strikes the second shell 9, as shown in FIGS. 10 and 11, in the interior of the first shell 6, a holding member 7 and a transmission arm 10 are further provided between the first shell 6 and the second shell 9. The holding member 7 and the second shell 9 are respectively bolted together with different parts of the first shell 6, as shown in FIGS. 14 and 15. The transmission arm 10 extends downward from the upper part of the drawing device to the lower part of the drawing device and can clasp with the locking member 8. The holding member 7 is provided with a series of transmission components, and the handle 41 can apply force to these transmission components to make the transmission arm 10 move, thereby driving the locking member 8 to rotate and realizing the lock of the drawing device.

Specifically, please refer to FIGS. 11 to 13, the holding member 7 is provided with a transmission arm 10, an elastic member 11 (in this embodiment, a spring), a pressing plate 12 and two toothed transmission members 13. The transmission arm 10 is located on the lower side of the elastic member 11 and is fixedly connected to the elastic member 11, the two toothed transmission members 13 are provided on the left and right sides of the transmission arm 10, and the pressing plate 12 is located at the front of the transmission arm 10, the elastic member 11 and the toothed transmission members 13. More specifically, the left and right ends of the holding member 7 are provided with first limit guides 14 having V-shaped snap ends, and the left and right ends of the pressing plate 12 are respectively snapped with the first limit guides 14 and can move up and down along the first limit guides 14. A contact block 121 is provided in the middle of the pressing plate 12, and the follower part 42 of the handle assembly 4 will extend to the upper part of the contact block 121 after passing through the second shell 9, and could exert a downward force on the contact block 121 when the handle 41 rotates upward, so that the pressing plate 12 could move downward as well.

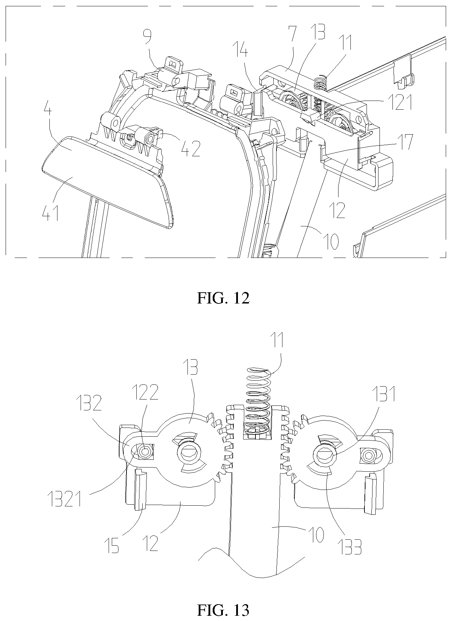

Referring further to FIGS. 13 and 14, follower posts 122 are provided on the left and right ends of the pressing plate 12 formed by extending backward from its rear surface, the upper part of the elastic member 11 protrudes out of the holding member 7 and is in contact (which may also be fixedly connected) with the first shell 6. The transmission arm 10 is disposed in the holding member 7 along the up-down direction of the vehicle and is provided with a cross-bar in the middle of the upper part thereof for snap-fitting with the elastic member 11. The upper left and right surfaces of the transmission arm 10 are provided with outward protruding teeth. The toothed transmission member 13 is specifically cylindrical, in which a center-through-hole 131 is provided, and a mating shaft 71 fixed to the holding member 7 is inserted in the center-through-hole 131 so as to enable the toothed transmission member 13 to be rotatably disposed on the holding member 7. At the same time, the toothed transmission member 13 is provided with teeth distributed on about 1/3 of a circumferential area of the end portion of the toothed transmission member 13 that is close to the transmission arm 10. By virtue of the teeth, the toothed transmission member 13 could engage with the upper part of the transmission arm 10, and the end portion of the toothed transmission member 13 away from the transmission arm 10 is provided with lugs 132 projecting outward from the side surfaces thereof. Elongate penetrations 1321 are provided in the lugs 132 along the front-back direction of the vehicle, the follower posts 122 extend into the penetrations 1321 and are capable of sliding along the penetrations 1321. In this way, when the handle 41 rotates upward and drives the pressing plate 12 to move downward, the toothed transmission members 13 located at different sides of the transmission arm 10 will rotate in opposite directions, and the transmission arm 10 will move upward under the drive of the toothed transmission member 13 and compress the elastic member 11. Similarly, when the external force applied to the handle 41 is withdrawn, the elastic member 11 will push the transmission arm 10 to move downward under the action of elasticity, and the toothed transmission member 13 will be reset accordingly.

Preferably, the pressing plate 12 is provided with second limit guides 15 extending backward from its rear surface, which are located on the lower side of the follower posts 122 and have V-shaped snap ends. Correspondingly, the holding member 7 is provided with third limit guides 16 with V-shaped snap ends that are clasped to the second limit guides 15, and the pressing plate 12 is capable of moving upward and downward relative to the third limit guides 16. Based on this, the first limit guide 14 and the third limit guide 16 can form a guide rail that ensures the pressing plate 12 has a reliable upward and downward movement trajectory.

Similarly, transmission limit guides 17 are provided at the left and right sides of a part of the transmission arm 10 located at the lower part of the holding member 7, which extend forward from the surface of the holding member 7. The transmission limit guides 17 have V-shaped snap ends and are snapped to the transmission arm 10 at the lower side of the transmission arm 10 which is provided with the tooth features. It can also form a guide rail function similar to the first limit guide 14 and the third limit guide 16, thereby ensuring the reliability of the up and down movement of the transmission arm 10.

More preferably, a limit snap 18 having a V-shaped snap end is provided on the peripheral side of the mating shaft 71. The limit snap 18 is formed by extending forward from the surface of the holding member 7, and is inserted into the corresponding limit slot 133 on the toothed transmission member 13, so that the toothed transmission member 13 can be snapped to the holding member 7 without hindering the rotation movement of the toothed transmission member 13 on the holding member 7. When the toothed transmission member 13 rotates, the limit slot 133 will rotate relative to the limit snap 18, and when the handle 41 rotates to its limit position (i.e., when the handle 41 strikes with the first shell 6), the edge of the end portion of the limit slot 133 will strikes with the limit snap 18. The purpose of the provision of the limit snap 18 in the present embodiment is to enable the toothed transmission member 13 to be firmly secured to the holding member 7 along the front-back direction of the vehicle.

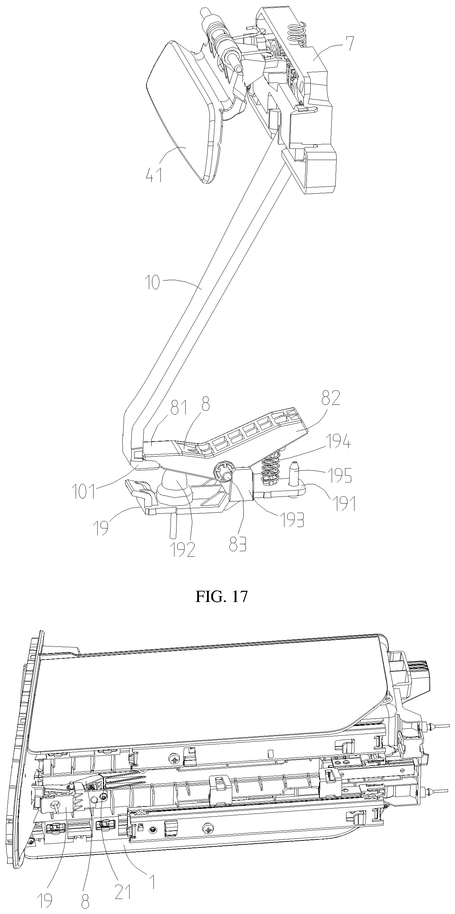

Referring to FIGS. 14 to 16, the transmission arm 10 in this embodiment is L-shaped. After passing downward through the holding member 7, the transmission arm 10 passes backward through the first shell 6 from the lower front side of the first shell 6 and extends between the drawing member 2 and the base assembly 1 to contact with the locking member 8. The transmission arm 10 has an L-shaped hooked end 101 as shown in FIG. 17 which extends to the rear side of the first shell 6 and is detachably snapped with the locking member 8. Furthermore, in this embodiment, a U-shaped limit member 22 is provided near a part of the transmission arm 10 located at the lower front side of the first shell 6, specifically on the front side of the transmission arm 10. The limit member 22 is secured to the first shell 6 with an opening facing rearward, more particularly, the open end of the limit member 22 passes through the first shell 6, has a V-shaped snap pattern, and snaps with the first shell 6 at a rear side of the first shell 6. A part of the lower part of the transmission arm 10 is located within the open end of the limit member 22 and spaced apart from the closed end of the limit member 22, so that the limit member 22 is able to have the effect of limiting the movement amplitude of the transmission arm 10.

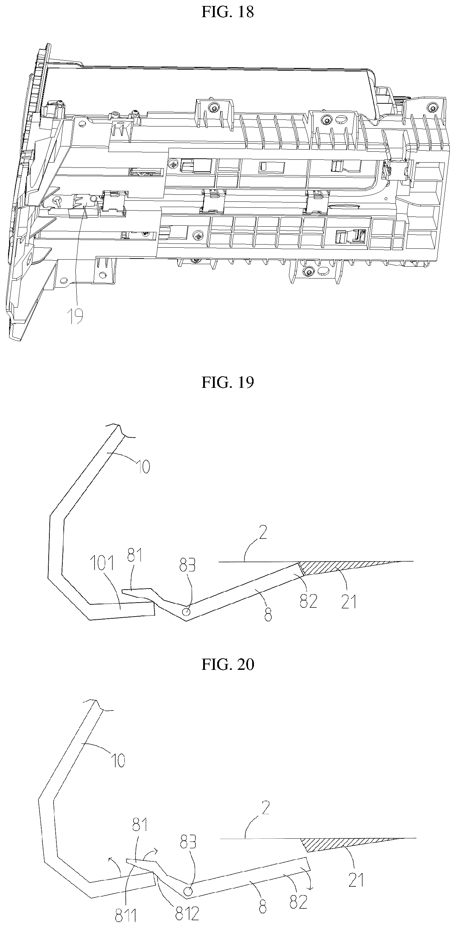

As mentioned above, the transmission arm 10 is connected to the locking member 8 through the hooked end 101, and can apply force to the locking member 8 to rotate the locking member 8 by lever principle, thereby realizing the unlocking of the drawing device. Specifically, the locking member 8 is a V-shaped member, the front end of which is located on the upper side of the hooked end 101 and is connected to the hooked end 101, the rear end of which is located at the front side of the protruding block 21 and is in contact with the front end of the protruding block 21 when the drawing device is in the locking state (as shown in FIG. 18). Referring the front end of the locking member 8 as the first end 81, and the rear end of the locking member 8 as the second end 82. In the case of the drawing device is locked, the height of the first end 81 is lower than the height of the second end 82, and the central part of the locking member 8 is fixed with a locking member pivot 83 arranged along left-right direction of the vehicle, the lower side of the locking member 8 is provided with an auxiliary assembly 19. The auxiliary assembly 19 is fixed to the base assembly 1 (see FIG. 19, wherein a part of the base is hidden in order to clearly illustrate the auxiliary assembly), and includes a base plate 191, a flexible member 192, a pivot support 193, a reset elastic member 194 (which is a spring in this embodiment) and a connection member 195. The flexible member 192, the pivot support 193, the reset elastic member 194 and the connection member 195 are disposed sequentially from front to back on the base plate 191. The connection member 195 is a bolt for sequentially passing through the base plate 191 and the base assembly 1 from bottom to top, to secure the base plate 191 to the base assembly 1. The flexible member 192 is a rubber member with a shape similar to a lollipop, which is located on the lower side of the first end 81 and fixed to the base plate 191. The pivot support 193 includes plate members provided on the left and right sides of the locking member 8, which extend upward from the surface of the base plate 191 and locate on the rear side of the locking member pivot 83, for allowing the locking member pivot 83 to be rest on. The reset elastic member 194 is located on the lower side of the second end 82, with one end thereof being fixedly connected to the second end 82, and the other end thereof being fixedly connected to the base plate 191, for realizing the resetting of the locking member 8. Further, in the circumferential of the locking member pivot 83, one part of the locking member pivot 83 is in contact with the pivot support 193 and the other part of the locking member pivot 83 is inserted in a corresponding plate member of the base assembly 1. The plate member is provided with a U-shaped aperture 23 having an opening toward the pivot support 193 (see Fig. 16). The locking member pivot 83 is inserted in the opening and abuts against the pivot support 193, so that the locking member 8 is rotatably disposed between the base assembly 1 and the drawing member 2.

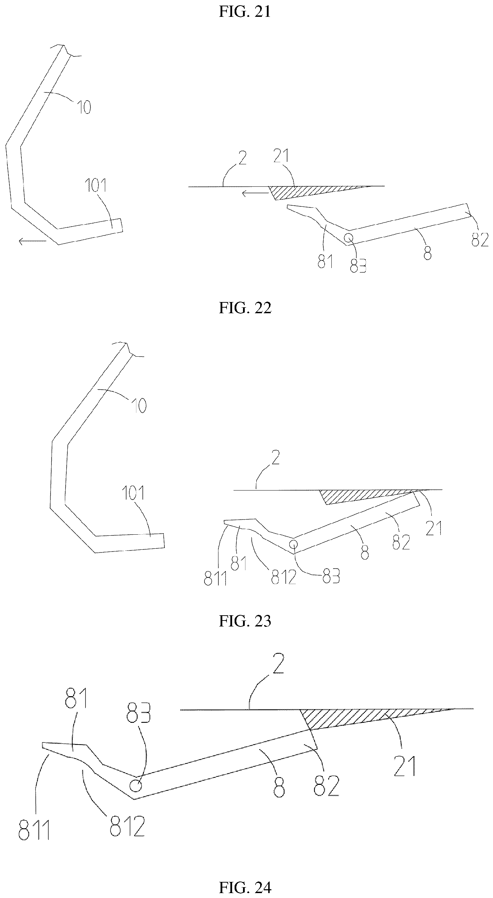

According to the description of the transmission arm 10, the transmission arm 10 will rotate upward when the handle 41 rotates upward under the external force. Base in this, as shown in FIGS. 20 and 21, the hooked end 101 of the transmission arm 10 will drive the first end 81 of the locking member 8 upward, causing the locking member pivot 83 fixedly connected with the locking member 8 to rotate, and then the second end 82 to rotate downward, so that the reset elastic member 194 will be compressed, and the rear surface of the locking member 8 will be separated from the front surface of the protruding block 21. At this time, if the occupant hold the handle 41 and apply outward force, the transmission arm 10 and the drawing member 2 will move forward as shown in FIG. 22 (at this time, the handle assembly 4, the first shell 6, the second shell 9 and the holding member 7 will also move forward, which is not shown in FIG. 22), so that the drawing member 2 is pulled outward to perform the placing or removing operation of objects.

In accordance with the above description, when the transmission arm 10 is moved forward and separated from the locking member 8, the second end 82 will be moved upward by the elastic force of the reset elastic member 194 until it is in contact with the lower surface or the protruding block 21 of the base assembly 1 (as shown in FIG. 23). At the same time, the first end 81 will be moved downward to a corresponding height based on the upward movement distance of the second end 82. Thereafter, when the occupant completes the placing or removing operation and pushes the drawing member 2 back inward, the drawing member 2 will move backward under the push of the occupant, and the second end 82 will abut against the slant lower surface of the protruding block 21 again and move relative to the slant lower surface (in fact, the surface is moving backward). Then, after the rear surface of the second end 82 moves across the lowest point of the protruding block 21 (as in Fig. 24), the second end 82 will move upward again under the elastic force of the reset elastic member 194 and return to the height in the locking state of the drawing device, and will hinder in the expected pull-out trajectory of the protruding block 21 again, the first end 81 will also return to the height in the locking state of the drawing device, and the hooked end 101 of the transmission arm 10 will return to the lower side of the first end 81, and complete the reset of the drawing member 2.

Furthermore, connected first feature 811 and second feature 812 are provided on the lower surface of the first end 81 of the locking member 8 of this embodiment, wherein the first feature 811 is located in front of the second feature 812. The first feature 811 is a chamfer with a higher front and a lower back, and the second feature 812 is a chamfer that makes the lower surface of the first end 81 have an arc concave, and the two features is arranged to ensure the smooth reset of the transmission arm 10.

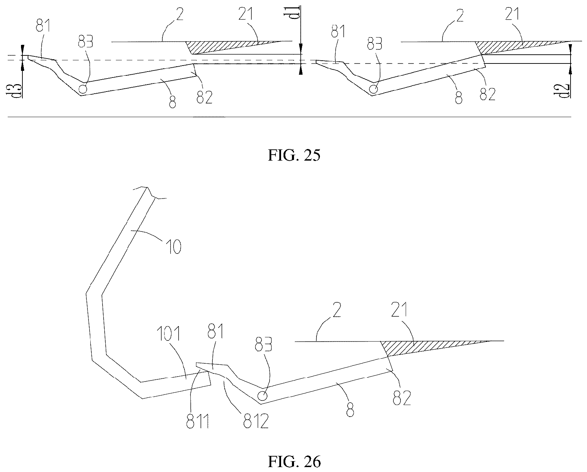

Specifically, in order to ensure that the second end 82 and the protruding block 21 are indeed separated from each other when the handle 41 is rotated to the travel limit, when the handle 41 is rotated to the travel limit, the second end 82 is often arranged to move to the down side of the lower side of the lowest point of the protruding block 21 as shown in FIG. 25, i.e., the second end 82 has a clearance d1 with the lowest point of the protruding block 21, at this time, the height of the second end 82 is set as a first stopping height, and the height of the first end 81 is set as a first force height. Subsequently, when the drawing member 2 is pushed back, since the second end 82 will abut against the protruding block 21 under the action of the resilient force of the reset elastic member 194, during the resetting process, when the second end 82 is abutted against the lowest point of the protruding block 21 again, the height of the second end 82 is set as a second stopping height, the height of the first end 81 is set as a second force height, the second stopping height will be higher than the first stopping height and there will be a first height difference d2, and the second force height will be lower than the first force height and there will be a second height difference d3, which will lead to the problem that the hooked end 101 of the transmission arm 10 will possibly interfere with the first end 81 during the resetting process, resulting in a situation in which the hooked end 101 is unable to be reset (i.e., it is unable to return to the lower side of the first end 81). Furthermore, since some occupants are accustomed to rotating the handle 41 upward while pushing back the drawing member 2, the hooked end 101 of the transmission arm 10 will be in an upward state, which further increases the risk of interference between the hooked end 101 and the first end 81.

Based on this, the present embodiment is provided with the first feature 811 and the second feature 812 on the first end 81 of the locking member 8, due to the presence of the chamfered first feature 811, the thickness of the first end 81 of the locking member 8 will have the smallest value at the forefront thereof. As shown in FIG. 26, when the hooked end 101 of the transmission arm 10 interferes with the first end 81 during the reset process, the hooked end 101 may slide into the lower side of the first end 81 along the slant surface formed on the locking member 8 by the first feature 811, preferably, when the hooked end 101 slides into the indented area formed on the locking member 8 by the second feature 812, the hooked end 101 completes the reset, and at the same time returns to the stable hooked state with the locking member 8. Furthermore, when the hooked end 101 slides into the indented area formed on the locking member 8 by the second feature 812, it will generate a slight knocking sound with the indented area, and such knocking sound can serve as a reminder for the occupant that the reset has been completed, ensuring the operation feeling of the occupant. Of course, whether or not provide the first feature 811 and the second feature 812 can be determined by the person of ordinary skill in the art according to specific requirements.

In summary, by providing the protruding block 21 at the lower part of the drawing member 2, providing the transmission arm 10, and providing the locking member 8 that can hinder the movement of the protruding block 21 in the expected movement direction of the drawing member 2 when the drawing member 2 is opened from a locking state of the drawing device, and then connecting the transmission arm 10 to the locking member 8, so that the movement of the transmission arm 10 can drive the locking member 8 away from the expected movement trajectory of the protruding block 21. The present document is able to provide a drawing device, which has the following beneficial effects:
1. The drawing device provided by the present document has a large space for adjustment of the smoothness of operation and the stutter sensation. Particularly, since the second end 82 usually abuts against the protruding block 21 when the drawing member 2 is pulled out or reset, the person of ordinary skill in the art is able to adjust the smoothness and the stutter sensation that is fed back to the occupant during the movement of the drawing member 2 as needed by flexibly setting the length and slope of the protruding block 21. Meanwhile, since the protruding block 21 is a rib arranged at the bottom of the drawing member 2, the range of the length that can be set for the protruding block 21 is obviously much greater than the range of the slope that can be set on the strip latch in the related art, and a larger adjustment space can be provided for the operation smoothness and the stutter sensation of the protruding block 21.
2. Based on the foregoing structure, the present document only needs to provide an external trim panel 20 (as shown in FIG. 6) in the front of the drawing device (specifically at the side of the first shell 6 away from the drawing member 2), so that the external trim panel 20 can snap with the fixing shell 5 and close the first shell 6, the front of the drawing device only has the handle 41 exposed outside at any time, which is able to provide a kind of drawing device with an invisible locking structure. Due to the arrangement of the invisible locking structure, the drawing device provided by the present document does not have the situation of the strip latch being exposed in the related art, which can substantially improve the product appearance of the drawing device.

It should be noted that the arrangement directions of the components as the handle assembly 4, the locking member 8, the transmission arm 10 and the base assembly 1 in the vehicle of the above embodiments can be flexibly adjusted by the person of ordinary skill in the art, for example, the handle assembly 4 can also be rotated around the rotation axis extending along the up-down direction of the vehicle, and the locking member 8 and the base assembly 1 are set at the right side of the drawing member 2, the locking member 8 is L-shaped extending in the left-right direction and then in the front-back direction of the vehicle, and so on. Further, the drawing device of the present document can not only be directly construct in the interior of a vehicle, but can also be applied to other products where there is a need for pulling-out and locking, such as a pull-out flip ashtray. Specifically, a person of ordinary skill in the art can directly adopt the drawing device provided in the present document to realize the pull-out function of the ashtray, and then separately set up the flip structure of the ashtray.

The foregoing is only a specific embodiment of the present document, but the protection scope of the present document is not limited thereto, and any variations or substitutions easily made by the person of ordinary skill in the art within the scope of the technology disclosed in the present document shall be included in the protection scope of the present document. Therefore, the protection scope of the present document shall be subject to the protection scope of the claims.

## Claims

1. A drawing device **characterized in that** comprising a drawing member (2), a transmission arm (10), a locking member (8) and a reset elastic member (194), the transmission arm (10) being provided on the drawing member (2) and being able to move inward or outward along with the drawing member (2), and extending from a first side of the drawing member (2) to a second side opposite to the first side, the drawing member (2) being provided with a protruding block (21) projecting toward its second side, the locking member (8) being located in a movement path of the drawing member (2) and capable of locking with the protruding block (21), a first end (81) of the locking member (8) being capable of detachably snapping with the transmission arm (10), and a second end (82) of the locking member (8) being located between the reset elastic member (194) and the drawing member (2);
when the transmission arm (10) is snapped with the locking member (8), the transmission arm (10) being capable of driving the locking member (8) to rotate by an external force and compressing the reset elastic member (194), releasing the locking of the protruding block (21) by the locking member (8) and allowing the drawing member (2) to move outward;
when the drawing member (2) moves inward, the locking member (8) being capable of being pushed by the reset elastic member (194) to relock the protruding block (21) and lock the drawing member (2).

2. The drawing device as claimed in claim 1, wherein further comprises a base assembly (1), the base assembly (1) is located on the second side of the drawing member (2), the drawing member (2) is able to move relative to the base assembly (1), the locking member (8) is located between the drawing member (2) and the base assembly (1), and a middle part of the locking member (8) is rotatably provided on the base assembly (1), when the transmission arm (10) applies force to the locking member (8) by the external force, the first end (81) and the transmission arm (10) are capable of rotating in a direction close to the drawing member (2) and the second end (82) is capable of rotating in a direction away from the drawing member (2).

3. The drawing device as claimed in claim 2, wherein further comprises an auxiliary assembly (19) fixed to the base assembly (1), the locking member (8) has a locking member pivot (83) fixed thereto, the auxiliary assembly (19) is provided with pivot supports (193), the pivot supports (193) are disposed at both sides of the locking member (8), and rotatably securing the locking member pivot (83) to the pivot supports (193).

4. The drawing device as claimed in claim 2, wherein further comprises an auxiliary assembly (19) fixed to the base assembly (1), the locking member (8) has a locking member pivot (83) fixed thereto, the auxiliary assembly (19) is provided with a pivot support (193), in a circumferential direction of the locking member pivot (83), a part of the locking member pivot (83) contacts with the pivot support (193) and the other part of the locking member pivot (83) passes through a plate member of the base assembly (1), the plate member is provided with a U-shaped aperture (23) having an opening facing toward the pivot support (193), the locking member pivot (83) passes through the aperture and abuts against the pivot support (193), enable the locking member (8) to be rotatably disposed between the base assembly (1) and the drawing member (2).

5. The drawing device as claimed in claim 1, wherein further comprises a holding member (7), the holding member (7) is provided with a pressing plate (12) and toothed transmission members (13), the pressing plate (12) is capable of moving relative to the holding member (7) under the action of an external force, and the toothed transmission member (13) is rotatably disposed on the holding member (7) with one end engaging with the transmission arm and the other end being slidably connected with the pressing plate (12), when the pressing plate (12) moves by the external force, it is capable of driving the toothed transmission member (13) to rotate and driving the transmission arm (10) to move toward the drawing member (2).

6. The drawing device as claimed in claim 5, wherein both ends of the holding member (7) are provided with first limiting guides (14), both ends of the pressing plate (12) cooperate with the first limiting guides (14) and are capable of sliding along the first limiting guides (14).

7. The drawing device as claimed in claim 5, wherein the toothed transmission members (13) are provided on both sides of the transmission arm (10), the toothed transmission member (13) is provided with teeth on an end near the transmission arm (10) and lugs (132) on an end far from the transmission arm (10), and the pressing plates (12) are provided with follower posts (122) extending into the lugs (132) from the pressing plates (12), when the pressing plate (12) moves toward the second side of the drawing member (2) under the action of the external force, the toothed transmission members (13) located at different sides of the transmission arm (10) are driven by the follower posts (122) and rotate in opposite directions, driving the transmission arm (10) to move toward the drawing member (2).

8. The drawing device as claimed in claim 5, wherein further comprises an elastic member (11) and a first shell (6), the first shell (6) is located at one end of the drawing member (2), the holding member (7) is provided inside the first shell (6), the elastic member (11) is located between the first shell (6) and the transmission arm (10) and is fixedly connected to the transmission arm (10), the elastic member (11) is compressed when the transmission arm (10) is driven by the toothed transmission member (13) toward the drawing member (2), the transmission arm (10) is reset under the push of the elastic member (11) after the withdrawal of the external force.

9. The drawing device as claimed in claim 8, wherein the transmission arm (10) is L-shaped, which extends from an upper side of the drawing member (2) to a lower side of the drawing member (2) via a front side of the drawing member (2), the holding member (7) is provided with a transmission limit guide (17), the transmission limit guide (17) is formed by projecting outward from the holding member (7), an upper part of the transmission arm (10) is connected to the transmission limit guide (17) and capable of sliding along the transmission limit guide (17), the transmission arm (10) has a U-shaped limit member (22) near a lower part of the transmission arm (10), a part of the transmission arm (10) is disposed in an opening of the limit member (22) and spaced apart from a closed end of the limit member (22).

10. The drawing device as claimed in claim 8, wherein the first side is an upper side and the second side is a lower side, and the transmission arm (10) is in the form of an L-shape, which extends from the upper side of the drawing member (2) to the lower side of the drawing member (2) via a front side of the drawing member (2); the transmission arm (10) is capable of driving the locking member (8) to rotate by the external force, to drive the first end (81) to rotate upward with the transmission arm (10), drive the second end (82) to rotate downward and away from the drawing member (2), so that the protruding block (21) is released from locking by the locking member (8), and the drawing member (2) is able to move outward.

11. The drawing device as claimed in claim 10, wherein the holding member (7) is provided with a transmission limit guide (17), the transmission limit guide (17) is formed by projecting outward from the holding member (7), an upper part of the transmission arm (10) cooperates with the transmission limit guide (17) and is capable of sliding along the transmission limit guide (17), and a U-shaped limit member (22) is provided nearby a lower part of the transmission arm (10), a part of the transmission arm (10) is located in an opening of the limit member (22) and spaced from a closed end of the limit member (22).

12. The drawing device as claimed in claim 5, wherein further comprises a handle assembly (4), the handle assembly (4) comprises a handle (41), a follower part (42) and a rotation shaft (43), the rotation shaft (43) is located between the handle (41) and the follower part (42), the follower part (42) is capable of driving by the handle (41) to apply force to the pressing plate (12) to make the pressing plate (12) slide.

13. The drawing device as claimed in claim 12, wherein further comprises an exterior trim panel (20) and a fixing shell (5), the fixing shell (5) cover at an outer side of the first shell (6), the exterior trim panel (20) is provided between the handle (41) and the first shell (6), and located in front of the first shell (6), which is capable of snapping with the fixing shell (5) to cover the first shell (6).

14. A vehicle **characterized in that** comprising a drawing device as claimed in any one of claims 1-13.
